Europäisches Patentamt

European Patent Office

Office européen des brevets

(19)

(11) Numéro de publication: **0 020 245 B1**

(12) **FASCICULE DE BREVET EUROPEEN**

(45) Date de publication du fascicule du brevet:
06.04.83

(51) Int. Cl.³: **F 24 J 3/02**

(21) Numéro de dépôt: **80400712.8**

(22) Date de dépôt: **21.05.80**

(54) Récepteur pour chaudière solaire à concentration linéaire.

(30) Priorité: **28.05.79 FR 7913471**

(43) Date de publication de la demande:
**10.12.80 Bulletin 80/25**

(45) Mention de la délivrance du brevet:
**06.04.83 Bulletin 83/14**

(84) Etats contractants désignés:
**BE DE GB IT**

(56) Documents cités:

**FR-A-1 325 108**
**FR-A-2 292 277**
**FR-A-2-372 400**
**GB-A-1 536 369**
**US-A-1 661 473**
**US-A-4 022 184**
**US-A-4 044 753**
**US-A-4 088 120**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Ambille, Georges, 3, Avenue André Maurois, F-33510 Andernos (FR)**
Inventeur: **Bacconnet, Eugène, 19, rue Malte Brun, F-91460 Marcoussis (FR)**
Inventeur: **Ragot, Philippe, 36, rue Emile Zola, F-92150 Suresnes (FR)**

(74) Mandataire: **Mongrédien, André et al, c/o BREVATOME 25, rue de Ponthieu, F-75008 Paris (FR)**

Récepteur pour chaudière solaire à concentration linéaire

La présente invention a pour objet un récepteur pour chaudière solaire à concentration linéaire.

Ce genre de chaudière solaire est constituée par un ensemble de miroirs plans disposés le long des génératrices d'un cylindre, ces miroirs étant orientés de telle manière que les rayons solaires qu'ils réfléchissent soient focalisés sur une même ligne confondue avec une génératrice du cylindre, et par un récepteur de forme linéaire disposé le long de cette ligne de focalisation.

En général, l'ensemble des miroirs est fixe et la ligne où sont focalisés les rayons réfléchis se déplace sur le cylindre lorsque la position du soleil varie. Pour assurer au dispositif une efficacité constante, quelle que soit la position du soleil, il est alors nécessaire que le récepteur soit mobile et suive le déplacement de la ligne de focalisation. A cette fin, le récepteur est fixé, par ses deux extrémités, à deux bras tournants animés du mouvement de rotation approprié.

Une telle installation est décrite notamment dans le brevet américain n° 3 868 823 du 4 mars 1975 intitulé «Concentrator, Method and System for utilizing radiant energy», dans le rapport GA-A 14 883 de J. R. SCHUSTER et al., publié en mars 1978 par «General Atomic Company», et intitulé «Fixed mirror solar concentration for power generation», dans la demande de brevet français n° 2 372 400 déposée le 30 novembre 1977, dans le brevet américain n° 4 022 184 délivré le 10 mai 1977.

Les récepteurs de l'art antérieur présentent l'inconvénient d'une assez grande complexité que l'invention se propose justement de réduire. Pour cela, l'isolant thermique utilisé dans le récepteur se voit confier une fonction supplémentaire qui est celle de supporter le tube capteur; en outre, la structure porteuse est constituée d'un profilé en oméga suffisamment rigide pour qu'on puisse la suspendre à ses extrémités aux bras tournants.

De façon plus précise, la présente invention a pour objet un récepteur pour chaudière solaire à concentration linéaire, comprenant un tube capteur parcouru par un fluide caloporteur et disposé dans une structure porteuse formée par un profilé avec une large ouverture à sa base, caractérisé en ce que ledit profilé présente une section droite en forme d'oméga, ce profilé étant muni d'un renfort interne, et en ce que le tube capteur est tenu par des entretoises rigides en matière isolante réparties le long du profilé et fixées à la base de l'oméga.

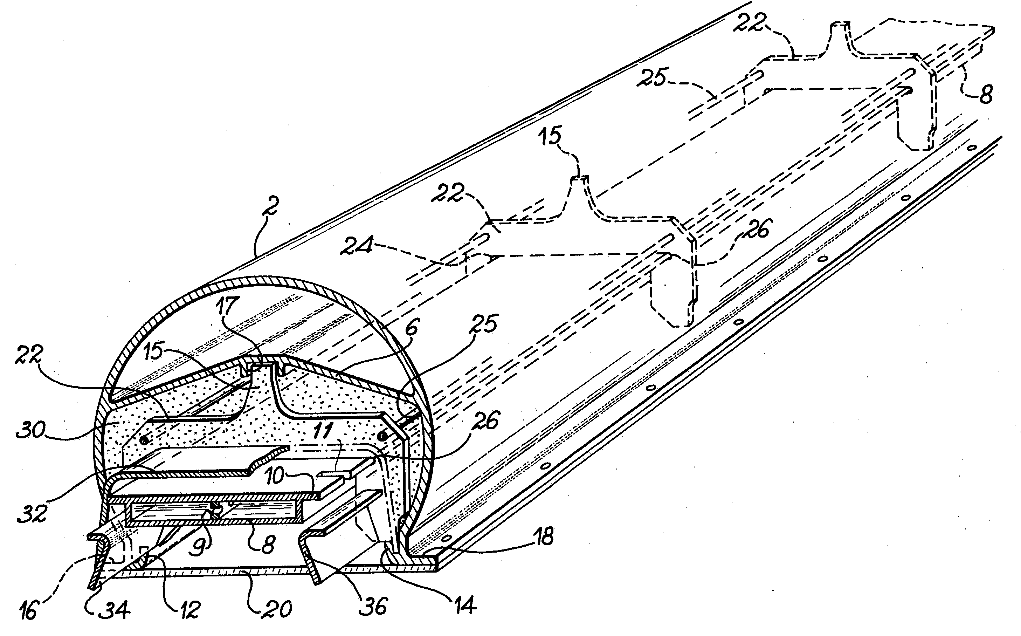

De toute façon, les caractéristiques et avantages de l'invention apparaîtront mieux à la lecture de la description qui suit, d'exemples de réalisation donnés à titre explicatif et nullement limitatif. Cette description se réfère à un dessin sur lequel la figure unique représente, en coupe transversale, un mode de réalisation conforme à l'invention.

Le récepteur représenté sur la figure comprend un profile 2 par exemple en alliage léger, en forme d'oméga, avec une large ouverture à la base; ce profilé est muni d'un renfort interne 6, disposé entre l'axe et le fond de l'oméga. A sa partie inférieure, le profilé comprend deux retours 12 et 14 disposés obliquement vers l'intérieur du profilé et deux pieds 16 et 18 permettant la fixation d'une vitre 20.

Des entretoises rigides 22 (par exemple en céramique) sont réparties à intervalles réguliers et supportées par les retours 12 et 14 du profilé. Ces entretoises peuvent être tenues en place par des tirants 25 et par un tenon 15 s'adaptant dans une rainure 17 prévue dans le renfort 6. Dans ces entretoises sont usinées des fentes 24 et 26 dans lesquelles s'encastre une tôle 10 support d'un tube capteur 8. L'espace compris entre le renfort 6, le profilé 2, le tube capteur 8 et les entretoises 22 est rempli d'un isolant fibreux 30 (par exemple du type laine de roche) maintenu en place par des feuilles isolantes 32 placées dans les intervalles entre entretoises.

Le tube capteur comporte une ou plusieurs entretoises internes télles que 9 s'étendant sur toute la longueur du tube et qui lui permettent de supporter sans déformation la pression interne due au fluide caloporteur du tube. Les entretoises comportant des trous répartis permettant le mélange du fluide caloporteur circulant de part et d'autre de l'entretoise.

Des miroirs plans 34 et 36 sont fixés à la partie inférieure du profilé sur l'isolant. Ces miroirs ne touchent ni le tube ni le profilé. Ils servent principalement à protéger l'isolant et à diminuer les pertes optiques. Ils peuvent être en aluminium brillant, en verre argenté, etc.

Il est avantageux d'usiner dans la tôle 10 des échancrures 11, d'une largeur un peu supérieure à celle des entretoises 22, ce qui peut faciliter le montage du tube capteur par la base de l'oméga, au lieu de procéder par introduction du tube par l'une des extrémités latérales. On peut aussi remplacer la tôle 10 par des pattes régulièrement espacées.

La disposition retenue par l'invention, du fait de l'existence du profilé rigide, favorise également la fixation de l'ensemble sur les bras tournants donnant au récepteur le mouvement de rotation approprié. En effet, c'est le profilé qui peut être fixé à ces bras, et non le tube capteur, comme dans l'art antérieur (cf la demande de brevet 2 372 400 citée plus haut) ce qui facilite grandement les problèmes de raccord.

Le profilé décrit a une forme qui lui donne un moment d'inertie apte à limiter la flèche du récepteur entre ses différents points d'appui, lesquels peuvent être distants de plusieurs mètres. Cette flèche doit être faible afin d'éviter que le tube dans lequel circule le fluide caloporteur ne s'écarte trop de la génératrice du cylindre correspondant à la ligne de focalisation du concentrateur à miroirs segmentés.

A titre d'exemple, le demandeur a réalisé avec succès un récepteur du genre décrit, avec un profilé de diamètre 180 mm, d'ouverture 136 mm, de longueur 6 m et d'épaisseur 2,8 mm; le renfort interne possédait une épaisseur de 2,8 mm. Pour une chaudière de 48 m de long de récepteur comprenait huit éléments modulaires identiques alignés. Le tube capteur était un tube d'acier rectangulaire de 100 × 10 mm et de 6 m de long. Il était raccordé à ses extrémités à des tubes d'entrée-sortie cylindriques de diamètre 30 mm eux-mêmes solidaires de soufflets de dilatation.

La pression du fluide caloporteur dans ce tube est comprise entre 2 et 4 bars. Un calcul de la flèche f prise en son centre par un module récepteur de 6 m donne pour les deux cas suivants:

1) plan d'ouverture horizontal: f = 8 mm;
2) plan d'ouverture vertical: f = 3 mm.

Ces résultats ont été confirmés par l'expérience. Dans le cas 1), la fèche influe peu sur la qualité du récepteur. Par contre, dans le cas 2), la flèche doit être le plus faible possible; dans ce cas, un très bon résultat a été obtenu grâce à la forme donnée au profilé et un positionnement judicieux du renfort interne.

Après cette description, on voit que le récepteur de l'invention offre plusieurs avantages sur les systèmes de l'art antérieur:

1) il ne comprend pas de reconcentreur, d'où une amélioration du rendement optique par suppression des pertes dans le reconcentreur;

2) le tube capteur est supporté par l'isolant thermique: cela évite tout contact thermique entre le capteur et la structure d'où l'élimination des pertes par pont thermique;

3) la structure porteuse en profilé présente quant à elle les avantages suivants:

a) elle est simple et bon marché,

b) elle fait appel à une technique maîtrisée qui est celle notamment des mâts de bateaux,

c) ses caractéristiques mécaniques sont intéressantes: le profil est étudié pour présenter un moment d'inertie tel que la flèche du module de 6 m soit inférieure ou égale à 3 mm, tout en fournissant cependant un espace suffisant à l'intérieur pour placer le tube capteur avec une bonne isolation thermique,

d) le tube capteur se trouve protégé par le fait qu'il se trouve confiné dans une enceinte fermée,

e) cette enceinte est de dimensions réduites: d'où une diminution des ombres portées par le récepteur sur le bloc miroir.

## Revendications

1. Récepteur pour chaudière solaire à concentration linéaire, comprenant un tube capteur (8) parcouru par un fluide caloporteur et disposé dans une structure porteuse formée par un profilé avec une large ouverture à sa base, caractérisé en ce que ledit profilé (2) présente une section droite en forme d'oméga, ce profilé étant muni d'un renfort interne (6), et en ce que le tube capteur (8) est tenu par des entretoises rigides (22) en matière isolante réparties le long du profilé (2) et fixées à la base de l'oméga.

2. Récepteur selon la revendication 1, caractérisé en ce que les entretoises (22) sont percées de fentes (24, 26), et en ce que le tube capteur (8) est muni d'une tôle (10) s'engageant dans lesdites fentes.

3. Récepteur selon la revendication 1, caractérisé en ce que l'espace compris entre le renfort (6), le profilé (2), le tube capteur (8) et les entretoises (22) est rempli d'un matériau isolant thermique (30) maintenu en place par des feuilles (32) en isolant thermique placées dans les intervalles séparant les entretoises (22).

4. Récepteur selon la revendication 1, caractérisé en ce qu'il comprend deux miroirs plans (34, 36) disposés à la base du profilé.

## Claims

1. Collector for a solar heater with linear concentration comprising an absorber tube (8) traversable by a heat transfer fluid, located within a carrier structure formed by a profile having a large opening at its base, characterized in that the said profile (2) has a cross-section in the form of the letter omega, said profile having an internal reinforcement (6), and in that the absorber tube (8) is held by rigid struts (22) made from insulating material located at intervals along the profile (2) and fixed to the base of the omega.

2. Collector according to Claim 1, characterized in that the struts (22) are pierced by slots (24, 26), and in that the absorber tube (8) is provided with a sheet (10) engaging with said slots.

3. Collector according to Claim 1, characterized in that the space between the reinforcement (6), the profile (2), the absorber tube (8) and the struts (22) is filled with thermally-insulating material (30) held in place by sheets (32) of thermal insultation placed in the intervals separating the struts (22).

4. Collector according to Claim 1, characterized in that it comprises two planar reflectors (34, 36) located at the base of the profile.

## Patentansprüche

1. Empfänger für einen Sonnenkessel mit linearer Fokussierung, mit einem Aufnahmerohr (8), das durch ein Wärmetransport-Strömungsmittel durchströmt ist und in einem Trageaufbau angeordnet ist, welcher von einem Profil mit einer grossen Öffnung an seiner Unterseite gebildet ist, dadurch gekennzeichnet, dass das Profil (2) einen omegaförmigen Normalschnitt aufweist und mit einer innenliegenden Verstärkung (6) versehen ist, und dass das Aufnahmerohr (8) durch starre Stege (22) aus Isoliermaterial gehalten ist, welche längs des Profils (2) verteilt angeordnet und an der Unterseite des Omega befestigt ist.

2. Empfänger nach Anspruch 1, dadurch gekennzeichnet, dass die Stege (22) von Schlitzen (24, 26) durchdrungen sind, und dass das Aufnahmerohr (8) mit einem Blech (10) versehen ist, welches in die genannten Schlitze eingreift.

3. Empfänger nach Anspruch 1, dadurch gekennzeichnet, dass der Zwischenraum, der zwischen der Verstärkung (6), dem Profil (2), dem Aufnahmerohr (8) und den Stegen (22) gebildet ist, mit einem Wärmeisoliermaterial (30) ausgefüllt ist, welches durch dünne Platten (32) aus Wärmeisoliermaterial an Ort und Stelle gehalten wird, welche in die Zwischenräume eingesetzt sind, die die Stege (22) voneinander trennen.

4. Empfänger nach Anspruch 1, dadurch gekennzeichnet, dass er zwei ebene Spiegel (34, 36) umfasst, welche an der Profil-Unterseite angebracht sind.